# EUROPEAN PATENT SPECIFICATION

(11) **EP 3 156 597 B1**
(45) Date of publication and mention of the grant of the patent: **27.11.2019**
(21) Application number: 16192670.4
(22) Date of filing: 06.10.2016
(51) Int. Cl.: F01D 5/18

(54) **COOLING HOLES OF TURBINE**
KÜHLLÖCHER EINER TURBINE
TROUS DE REFROIDISSEMENT DE TURBINE

(30) Priority: 12.10.2015 US 201514880900
(43) Date of publication of application: 19.04.2017
(73) Proprietor: United Technologies Corporation, Farmington, CT 06032 (US)
(72) Inventor: LEWIS, Scott D., Vernon, CT 06066 (US); THOLE, Karen A., State College, PA 16803 (US); SCHROEDER, Robert, Wheaton, IL 60189 (US)
(74) Representative: Dehns

(56) References cited:
- EP-A2- 2 131 108
- EP-A2- 2 131 109
- EP-A2- 2 230 384
- WO-A1-2014/150490

## Description

### BACKGROUND

This disclosure relates to a gas turbine engine, and more particularly to cooling features of a gas turbine engine.

Gas turbine engines, such as those used to power modern commercial and military aircrafts, generally include a compressor section to pressurize an airflow, a combustor section for burning hydrocarbon fuel in the presence of the pressurized air, and a turbine section to extract energy from the resultant combustion gases.

Gas turbine engine components, such as airfoils, combustor sections, augmentor sections, and exhaust duct liner for example, are subject to high thermal loads for prolonged periods of time. Conventionally, various cooling arrangements are provided to film cool these components. Among these are impingement cooling on a backside of the component and film cooling on a gas side of the component to maintain temperature within material limits.

European Patent EP 2 230 284 discloses the use of cooling holes for film cooling in turbine airfoils of gas turbine engines wherein inserts are disposed within the cooling holes which have a geometry that promotes turbulent flow of the cooling fluid.

International Patent Application WO 2014/150490 discloses a method of forming diffusion cooling holes wherein material is first removed from a substrate to form a metering section and a diffusion section and then a feature with a geometry that improves film cooling effectiveness is formed within the cooling hole, on its surface, by depositing material and selectively heating it.

European Patent Application EP 2 131 109 discloses a film cooling passage comprising two separate rows of chevron-shaped ribs that each generate a vortex flow, one in a first direction and one in a second direction, to reduce flow separation of the cooling fluid used in the film cooling.

### BRIEF DESCRIPTION

In some aspects of the disclosure, a component of a gas turbine engine is provided including at least one cooling hole formed in the component. The cooling hole has an interior surface that defines a flow path for air configured to cool a portion of the component. A feature is arranged within at least a portion of the cooling hole. The feature is configured to generate non-linear movement of the air as it flows there through, and the feature includes rifling. The cooling hole includes a metering section and a diffusion section. The diffusion section is fluidly coupled to and arranged downstream from the metering section and the hydraulic diameter of the diffusion section increases in a direction away from the metering section. The feature is arranged with the metering section and the diffusion section of the cooling hole via an additive manufacturing process.

In addition to one or more of the features described above, or as an alternative, further embodiments may include that the feature extends over a portion of the cooling hole.

In addition to one or more of the features described above, or as an alternative, further embodiments may include that the feature extends over substantially all of a length the cooling hole.

In addition to one or more of the features described above, or as an alternative, further embodiments may include that the metering section has a substantially uniform hydraulic diameter over its length.

In addition to one or more of the features described above, or as an alternative, further embodiments may include that the cooling hole has a tapered configuration.

In addition to one or more of the features described above, or as an alternative, further embodiments may include that the cooling hole has a conical configuration.

In addition to one or more of the features described above, or as an alternative, further embodiments may include that the feature extends about at least a portion of a periphery of an inner surface of the cooling hole.

In addition to one or more of the features described above, or as an alternative, further embodiments may include that the feature is integrally formed with an interior surface of the cooling hole.

In addition to one or more of the features described above, or as an alternative, further embodiments may include that the rifling has interleaved lands and grooves, the rifling being arranged spirally about an axis of defined by the cooling hole.

In addition to one or more of the features described above, or as an alternative, further embodiments may include that a height of the lands is between about 3% and about 30% of a hydraulic diameter of the metering section.

In addition to one or more of the features described above, or as an alternative, further embodiments may include that at least one of the lands is configured to rotate 360° occur over a distance between about 2 and about 15 times a hydraulic diameter of the cooling hole.

In addition to one or more of the features described above, or as an alternative, further embodiments may include that the component is an airfoil.

In some aspects of the disclosure, a turbine engine is provided including a component exposed to hot gas flow. At least one cooling hole is formed in the interior of the component. The cooling hole defines a flow path for air configured to cool a portion of the component and includes a feature configured to generate non-linear movement of air as it flows there through.

In addition to one or more of the features described above, or as an alternative, further embodiments may include that the feature is configured to cause the air to rotate about the central axis of the cooling hole.

In addition to one or more of the features described above, or as an alternative, further embodiments may include that the feature extends over at least a portion of a length of the cooling hole.

In some aspects of the disclosure, a method of cooling a component of a turbine engine is provided including providing air to a flow path defined by a cooling hole formed in the component wherein the cooling hole includes a metering section and a diffusion section, the diffusion section being fluidly coupled to and arranged downstream from the metering section and a hydraulic diameter of the diffusion section increases in a direction away from the metering section. The air within the flow path is rotated about a central axis of the cooling hole.

The feature is integrally formed with the interior surface of the metering section and diffusion section via an additive manufacturing process.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings which illustrate embodiments of the disclosure by way of example only, and in which:
FIG. 1 is a schematic cross-section of an example of a gas turbine engine;
FIG. 2A is a perspective view of an airfoil of the gas turbine engine, in a rotor blade configuration;
FIG. 2B is a perspective view of an airfoil of the gas turbine engine, in a stator vane configuration;
FIG. 3 is a cross-sectional view of an exemplary cooling hole of the gas turbine engine;
FIG. 3a is a perspective view of the outlet end of the cooling hole of FIG. 3;
FIG. 4 is a cross-sectional view of an exemplary cooling hole of the gas turbine engine;
FIG. 5 is a cross-sectional view of an exemplary cooling hole of the gas turbine engine according to an embodiment;
FIG. 5a is a perspective view of the outlet end of the cooling hole of FIG. 5 according to an embodiment;
FIG. 6 is a planar view of an inlet of an exemplary cooling hole according to an embodiment;
FIG. 7 is a planar and side view of an exemplary cooling hole according to an embodiment; and
FIG. 8 is a planar and side view of another exemplary cooling hole according to an embodiment.

### DETAILED DESCRIPTION

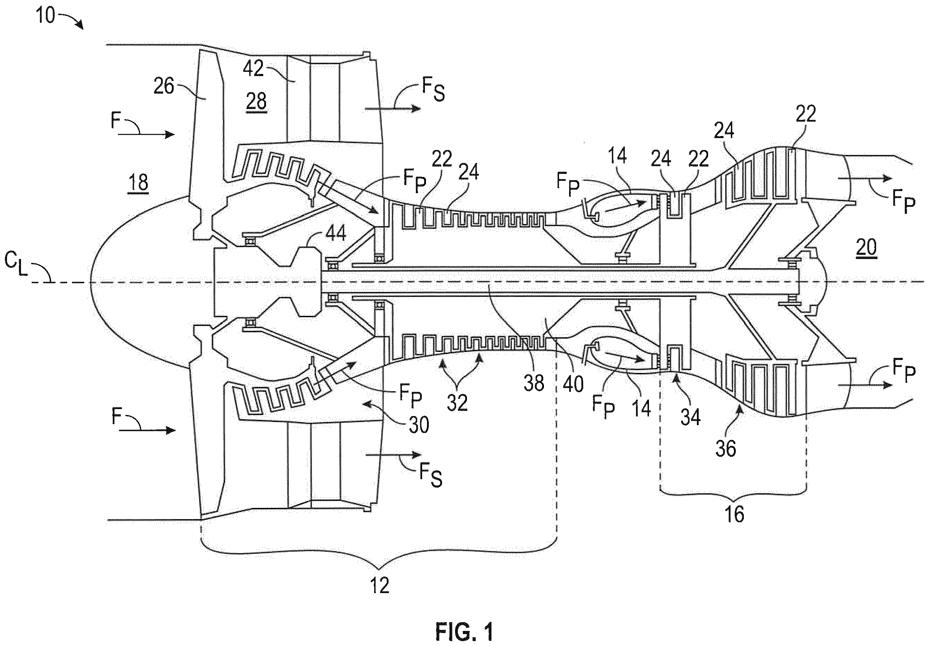

Referring now to the FIGS., a cross-sectional view of an example of a gas turbine engine 10 is illustrated in FIG. 1. Gas turbine engine (or turbine engine) 10 includes a power core with compressor section 12, combustor 14 and turbine section 16 arranged in flow series between upstream inlet 18 and downstream exhaust 20. Compressor section 12 and turbine section 16 are arranged into a number of alternating stages of rotor airfoils (or blades) 22 and stator airfoils (or vanes) 24.

In the turbofan configuration of FIG. 1, propulsion fan 26 is positioned in bypass duct 28, which is coaxially oriented about the engine core along centerline (or turbine axis) C_{L}. An open-rotor propulsion stage 26 may also be provided, with turbine engine 10 operating as a turboprop or unducted turbofan engine. Alternatively, fan rotor 26 and bypass duct 28 may be absent, with turbine engine 10 configured as a turbojet or turboshaft engine, or an industrial gas turbine.

In the two-spool, high bypass configuration of FIG. 1, compressor section 12 includes low pressure compressor (LPC) 30 and high pressure compressor (HPC) 32, and turbine section 16 includes high pressure turbine (HPT) 34 and low pressure turbine (LPT) 36. Low pressure compressor 30 is rotationally coupled to low pressure turbine 36 via low pressure (LP) shaft 38, forming the LP spool or low spool. High pressure compressor 32 is rotationally coupled to high pressure turbine 34 via high pressure (HP) shaft 40, forming the HP spool or high spool.

Flow F at inlet 18 divides into primary (core) flow F_{P} and secondary (bypass) flow F_{S} downstream of fan rotor 26. Fan rotor 26 accelerates secondary flow F_{S} through bypass duct 28, with fan exit guide vanes (FEGVs) 42 to reduce swirl and improve thrust performance. In some designs, structural guide vanes (SGVs) 42 are used, providing combined flow turning and load bearing capabilities.

Primary flow F_{P} is compressed in low pressure compressor 30 and high pressure compressor 32, then mixed with fuel in combustor 14 and ignited to generate hot combustion gas. The combustion gas expands to provide rotational energy in high pressure turbine 34 and low pressure turbine 36, driving high pressure compressor 32 and low pressure compressor 30, respectively. Expanded combustion gases exit through exhaust section (or exhaust nozzle) 20, which can be shaped or actuated to regulate the exhaust flow and improve thrust performance.

Low pressure shaft 38 and high pressure shaft 40 are mounted coaxially about centerline C_{L}, and rotate at different speeds. Fan rotor (or other propulsion stage) 26 is rotationally coupled to low pressure shaft 38. In advanced designs, fan drive gear system 44 is provided for additional fan speed control, improving thrust performance and efficiency with reduced noise output.

Fan rotor 26 may also function as a first-stage compressor for gas turbine engine 10, and LPC 30 may be configured as an intermediate compressor or booster. Alternatively, propulsion stage 26 has an open rotor design, or is absent, as described above. Gas turbine engine 10 thus encompasses a wide range of different shaft, spool and turbine engine configurations, including one, two and three-spool turboprop and (high or low bypass) turbofan engines, turboshaft engines, turbojet engines, and multi-spool industrial gas turbines.

In each of these applications, turbine efficiency and performance depend on the overall pressure ratio, defined by the total pressure at inlet 18 as compared to the exit pressure of compressor section 12, for example at the outlet of high pressure compressor 32, entering combustor 14. Higher pressure ratios, however, also result in greater gas path temperatures, increasing the cooling loads on rotor airfoils 22, stator airfoils 24 and other components of gas turbine engine 10. To reduce operating temperatures, increase service life and maintain engine efficiency, these components are provided with improved cooling configurations, as described below. Suitable components include, but are not limited to, cooled gas turbine engine components in compressor sections 30 and 32, combustor 14, turbine sections 34 and 36, and exhaust section 20 of gas turbine engine 10.

For improved service life and reliability, components of gas turbine engine 10 are provided with an improved cooling configuration, as described below. Suitable components for the cooling configuration include rotor airfoils 22, stator airfoils 24 and other gas turbine engine components exposed to hot gas flow, including, but not limited to, platforms, shrouds, casings and other endwall surfaces in hot sections of compressor 12 and turbine 16, and liners, nozzles, afterburners, augmentors and other gas wall components in combustor 14 and exhaust section 20.

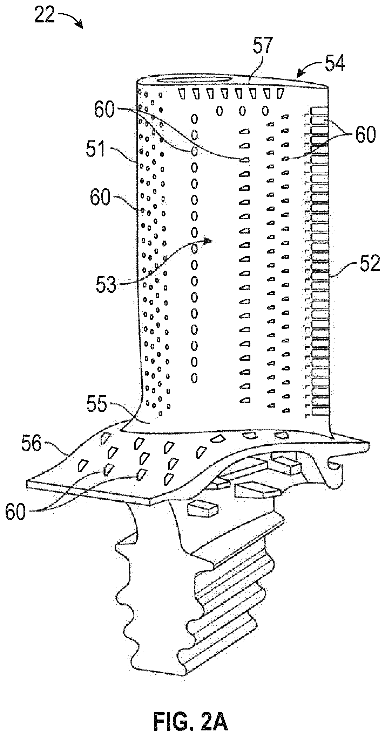

FIG. 2A is a perspective view of rotor airfoil (or blade) 22 for gas turbine engine 10, as shown in FIG. 1, or for another turbomachine. Rotor airfoil 22 extends axially from leading edge 51 to trailing edge 52, defining pressure surface 53 (front) and suction surface 54 (back) there between.

Pressure and suction surfaces 53 and 54 form the major opposing surfaces or walls of airfoil 22, extending axially between leading edge 51 and trailing edge 52, and radially from root section 55, adjacent inner diameter (ID) platform 56, to tip section 57, opposite ID platform 56. In some designs, tip section 57 is shrouded.

Cooling holes or outlets 60 are provided on one or more surfaces of airfoil 22, for example along leading edge 51, trailing edge 52, pressure (or concave) surface 53, or suction (or convex) surface 54, or a combination thereof. Cooling holes or passages 60 may also be provided on the endwall surfaces of airfoil 22, for example along ID platform 56, or on a shroud or engine casing adjacent tip section 57.

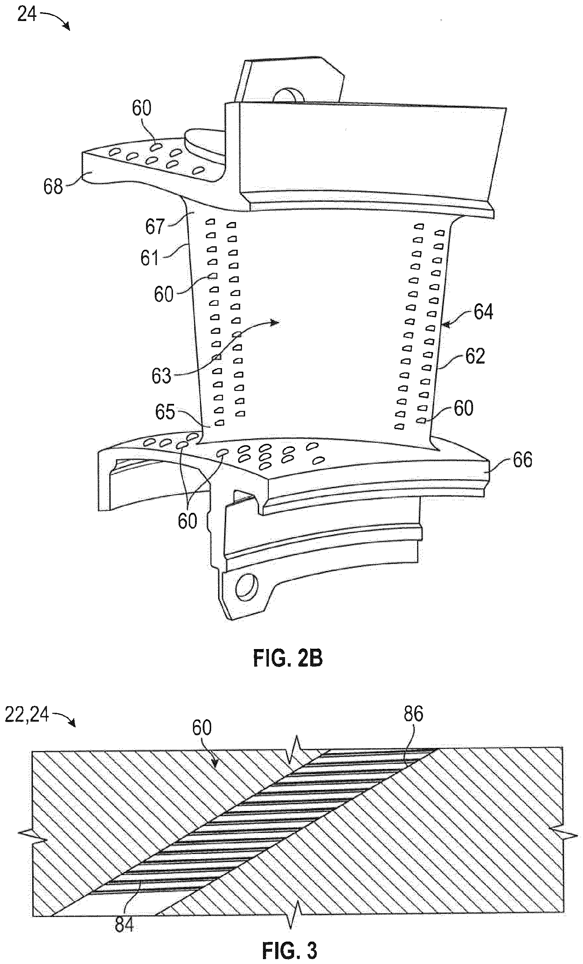

FIG. 2B is a perspective view of stator airfoil (or vane) 24 for gas turbine engine 10, as shown in FIG. 1, or for another turbomachine. Stator airfoil 24 extends axially from leading edge 61 to trailing edge 62, defining pressure surface 63 (front) and suction surface 64 (back) therebetween. Pressure and suction surfaces 63 and 64 extend from inner (or root) section 65, adjacent ID platform 66, to outer (or tip) section 67, adjacent outer diameter (OD) platform 68.

Cooling holes or outlets 60 are provided along one or more surfaces of airfoil 24, for example leading or trailing edge 61 or 62, pressure (concave) or suction (convex) surface 63 or 64, or a combination thereof. Cooling holes or passages 60 may also be provided on the endwall surfaces of airfoil 24, for example along ID platform 66 and OD platform 68.

Rotor airfoils 22 (FIG. 2A) and stator airfoils 24 (FIG. 2B) are formed of high strength, heat resistant materials such as high temperature alloys and superalloys, and are provided with thermal and erosion-resistant coatings. Airfoils 22 and 24 are also provided with internal cooling passages and cooling holes 60 to reduce thermal fatigue and wear, and to prevent melting when exposed to hot gas flow in the higher temperature regions of a gas turbine engine or other turbomachine. Cooling holes 60 deliver cooling fluid (e.g., steam or air from a compressor) through the outer walls and platform structures of airfoils 22 and 24, creating a thin layer (or film) of cooling fluid to protect the outer (gas path) surfaces from high temperature flow.

While surface cooling extends service life and increases reliability, injecting cooling fluid into the gas path also reduces engine efficiency, and the cost in efficiency increases with the required cooling flow. Cooling holes 60 are thus provided with improved metering and inlet geometry to reduce jets and blow off, and improved diffusion and exit geometry to reduce flow separation and corner effects. Cooling holes 60 reduce flow requirements and improve the spread of cooling fluid across the hot outer surfaces of airfoils 22 and 24, and other gas turbine engine components, so that less flow is needed for cooling and efficiency is maintained or increased.

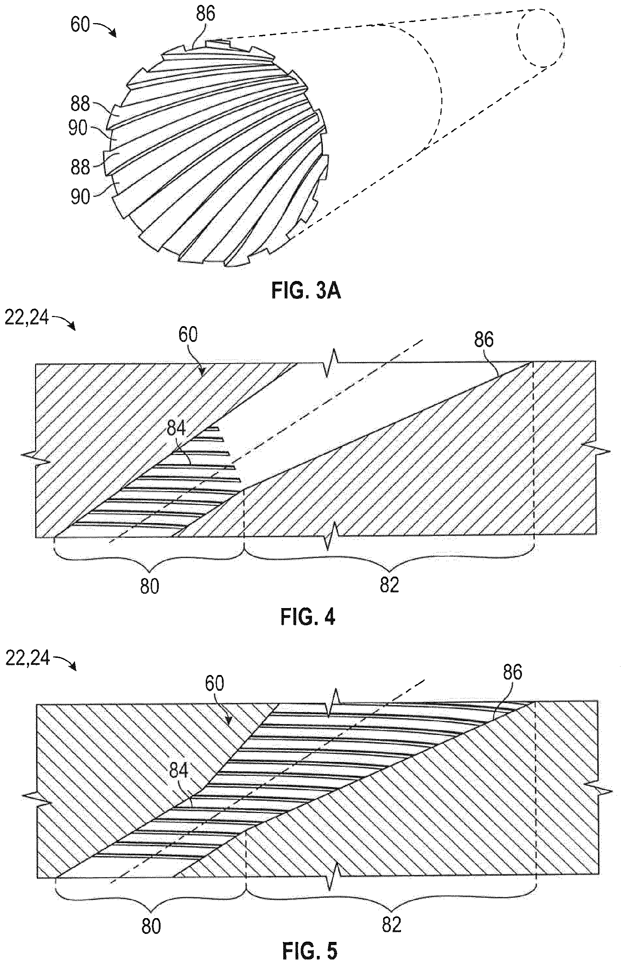

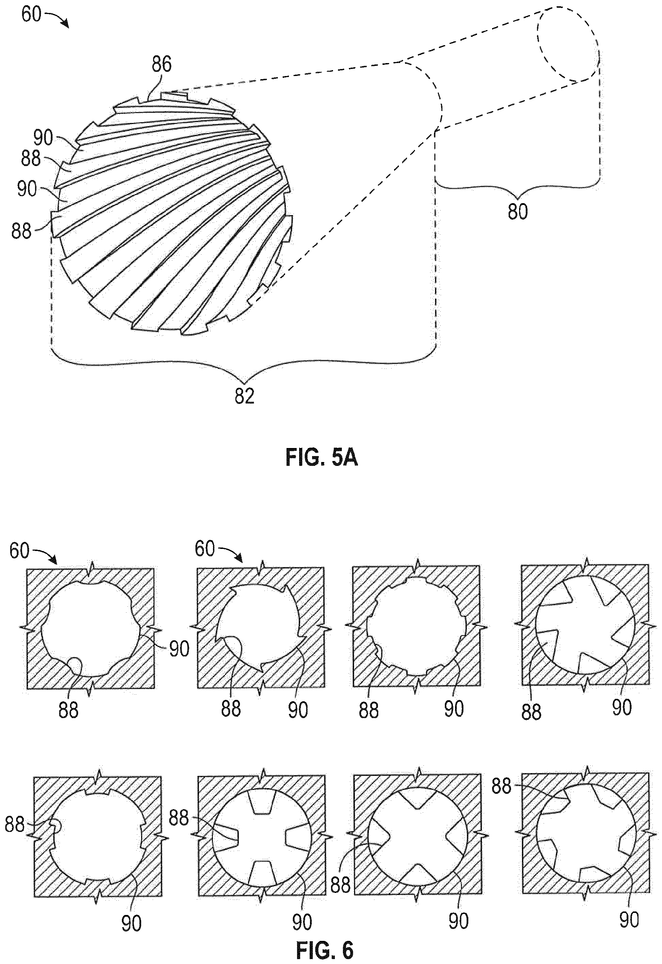

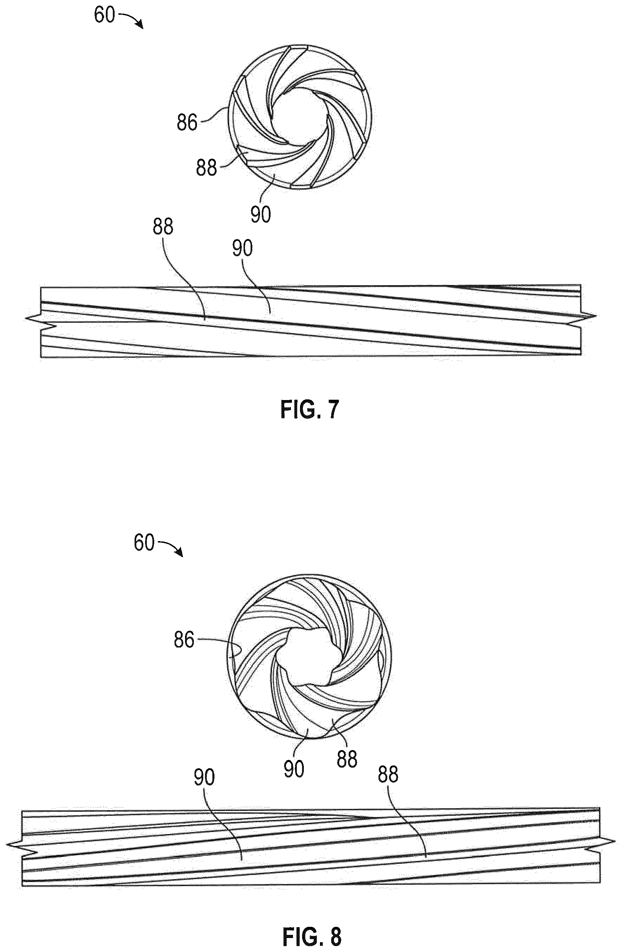

With reference now to FIGS. 3 - 8, the cooling holes 60 of a gas turbine engine 10, such as the cooling holes 60 formed in at least one of the rotor airfoils 22 and stator airfoils 24 for example, are illustrated in more detail. Although the cooling holes 60 are illustrated and described herein with reference to the airfoils 22, 24, it should be understood that the cooling holes 60 disclosed herein may be formed in any component of the engine 10 exposed to hot gas flow. In FIG. 3, the cooling hole 60 is a bore or through hole having a substantially constant hydraulic diameter over the length of the hole 60. In the present invention, the cooling hole 60 has a metering section 80 and a diffusion section 82, integrally formed and fluidly coupled to one another. The diffusion section 82 is configured to slow down the speed of the cooling air flowing there though. The hydraulic diameter of the metering section 80 and the diffusion section 82 at their interface is generally equal. In the present invention, the diffusion section 82 has a hydraulic diameter increasing in a direction away from the metering section 80. As a result, at least a portion of the diffusion section 82 has a diameter larger than the hydraulic diameter of the metering section 80. Embodiments where the diffusion section 82 has an increasing hydraulic diameter, generally include a tapered configuration, where the increase in hydraulic diameter is skewed relative to a central axis of the cooling hole 60, or a conical configuration (FIG. 5), where the increase in hydraulic diameter is centered about the central axis defined by the cooling hole 60.

As shown in FIGS. 3-5a, at least a portion of one or more of the plurality of cooling holes 60 of a gas turbine engine 20 includes a feature 84 configured to interrupt and create non-linear movement of the flow of air there through. Distinct cooling holes 60 within a plurality may include substantially identical features 84 or different features 84. In one embodiment, the feature 84 may be a separate component removably coupled to or seated within the cooling hole 60, such as a turbulator for example. In another embodiment, the feature 84 may be integrally formed with an interior surface 86 of the cooling hole 60. The feature 84 includes a twist relative to the central axis defined by the cooling hole 60 to encourage non-laminar, and more specifically, turbulent movement of the air flow. The twist of feature 84 is configured to create a swirling motion that causes the air flowing through the cooling hole to rotate, in either a clockwise or counterclockwise direction when viewed from an end of the cooling hole 60, as shown in FIGS. 3a, 5a, and 6. As a result, the air is configured to rotate about the centerline of the cooling hole 60.

In the illustrated embodiment, the feature 84 includes rifling formed about the interior surface 86 of a cooling hole 60. The rifling is formed by adding material to the interior surface 86 of the cooling hole 60, via an additive manufacturing process for example. The rifling 84 may extend over only a portion of the cooling hole 60, or only a portion of both the metering and diffusion sections 80, 82 for example. Alternatively, the rifling 84 may extend substantially over the entire length of the cooling hole 60, regardless of the geometry of the cooling hole 60, as shown in FIGS. 3 and 5. In addition, the rifling 84 may be formed about the entire periphery (FIG. 6), or only a portion thereof, of the interior surface 86.

Rifling 84 usually includes a plurality of helical or spiral inward facing lands 88 with interleaved grooves 90. In the illustrated, non-limiting embodiment, the plurality of lands 88 extend inwardly from the surface 86 of the cooling hole 60 towards the central axis, and the plurality of grooves 90 are formed by the interior surface 86. By adding the thickness of the plurality of lands 88 to the interior surface 86 such that the lands 88 extend into the cooling hole 60, the lands 88 more effectively interrupt and swirl the cooling flow passing through the cooling hole 60 when compared to traditional rifling that is formed by removing material from the interior surface 86.

The surfaces of these lands 88 and grooves 90 commonly include a curvature complementary to the respective radius of the cooling hole 60. With reference now to FIGS. 6-8, the rifling or other feature 84 formed into the interior surface 86 of the cooling holes 60 may include lands 88 and grooves 90 having any of a plurality of shapes or patterns. The various embodiments illustrated in FIG. 6 are intended as an example only, and it should be understood that rifling 84 having other geometries are also within the scope of the disclosure. In addition, the lands 88 and grooves 90 may have different sizes and shapes, or alternatively, may have substantially similar sizes and shapes. Further, the size and shape of the lands 88 and grooves 90 may be constant or may vary over the length of the cooling hole 60. In one embodiment, the lands 88 have a land height between about 3% and about 30% of the hydraulic diameter of the metering section 80. In addition, a full 360° rotation of one or more of the lands 88 may occur over a distance between about 2 and about 15 times the hydraulic diameter.

The cooling holes 60 described herein including a feature 84, such as rifling formed about the interior surface 86, provide a cooling solution that offers improved film cooling coverage and eliminates or reduces the problems associated with conventional cooling holes by increasing the movement of the air along the flow path defined by the cooling holes 60. As a result of this movement, the air provided at the outlet of the diffusion section 82 is better able to overcome the vortices around the cooling jets which are typically detrimental to the cooling air flow. Because a reduced portion of the cooling air flow is diverted away from the hot surface, the air is more effective at cooling an adjacent component of the turbine engine 10.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A component of a gas turbine engine (10) comprising:
at least one cooling hole (60) formed in the component, the cooling hole having an interior surface that defines a flow path for air configured to cool a portion of the component; and
a feature (84) including rifling arranged within at least a portion of the cooling hole such that a portion of the feature extends from the interior surface (86) inwardly towards a central axis of the cooling hole, the feature being configured to generate non-linear movement of the air as it flows therethrough;
**characterised in that** the cooling hole includes a metering section (80) and a diffusion section (82), the diffusion section being fluidly coupled to and arranged downstream from the metering section, a hydraulic diameter of the diffusion section increases in a direction away from the metering section, and **in that** the feature is arranged within the metering section and the diffusion section of the cooling hole via an additive manufacturing process.

2. The component according to claim 1, wherein the feature extends over a portion of the cooling hole.

3. The component according to claim 2, wherein the feature extends over substantially all of a length the cooling hole.

4. The component according to claim 1, 2 or 3, wherein the metering section has a substantially uniform hydraulic diameter over its length.

5. The component according to claim 1, wherein:
the diffusion section of the cooling hole has a tapered configuration; or
the diffusion section of the cooling hole has a conical configuration.

6. The component according to claim 1, wherein:
the feature extends about at least a portion of a periphery of an inner surface of the cooling hole; and/or
the feature is integrally formed with an interior surface of the cooling hole; and/or
the component is an airfoil

7. The component according to any preceding claim, wherein the feature includes rifling (84) has interleaved lands (88) and grooves (90), the rifling being arranged spirally about an axis of defined by the cooling hole.

8. The component according to claim 7, wherein:
a height of the lands is between about 3% and about 30% of a hydraulic diameter of the metering section; and/or
at least one of the lands is configured to rotate 360° occur over a distance between about 2 and about 15 times a hydraulic diameter of the cooling hole.

9. A turbine engine, comprising:
a component according to any preceding claim, to be exposed to hot gas flow.

10. The turbine engine according to claim 9, wherein the feature is configured to cause the air to rotate about the central axis of the cooling hole.

11. A method of cooling a component of a turbine engine, comprising:
providing air to a flow path defined by a cooling hole formed in the component, wherein the cooling hole includes a metering section (80) and a diffusion section (82), the diffusion section being fluidly coupled to and arranged downstream from the metering section;
a hydraulic diameter of the diffusion section increases in a direction away from the metering section; and
rotating the air within the flow path about a central axis of the cooling hole via rifling that extends inwardly from an interior surface of the metering section and diffusion section towards the central axis, wherein the rifling is integrally formed with the interior surface of the cooling hole via an additive manufacturing process.

## Patentansprüche

1. Komponente eines Gasturbinentriebwerks (10), umfassend:
wenigstens ein Kühlloch (60), das in der Komponente gebildet ist, wobei das Kühlloch eine Innenfläche aufweist, die einen Strömungsweg für Luft definiert, der dazu ausgestaltet ist, einen Abschnitt der Komponente zu kühlen; und
ein Merkmal (84) mit Rillen, das in wenigstens einem Abschnitt des Kühllochs angeordnet ist, derart, dass sich ein Abschnitt des Merkmals von der Innenfläche (86) einwärts zu einer Mittelachse des Kühllochs erstreckt, wobei das Merkmal dazu ausgestaltet ist, eine nichtlineare Bewegung der Luft zu erzeugen, während diese dadurch hindurch strömt;
**dadurch gekennzeichnet, dass** das Kühlloch einen Messbereich (80) und einen Diffusionsbereich (82) beinhaltet, wobei der Diffusionsbereich an den Messbereich fluidgekoppelt und stromabwärts von diesem angeordnet ist, ein hydraulischer Durchmesser des Diffusionsbereichs in einer Richtung weg vom Messbereich zunimmt und dass das Merkmal mittels eines additive Herstellungsprozesses in dem Messbereich und dem Diffusionsbereich des Kühllochs angeordnet ist.

2. Komponente nach Anspruch 1, wobei sich das Merkmal über einen Abschnitt des Kühllochs erstreckt.

3. Komponente nach Anspruch 2, wobei sich das Merkmal über im Wesentlichen eine gesamte Länge des Kühllochs erstreckt.

4. Komponente nach Anspruch 1, 2 oder 3, wobei der Messbereich über seine Länge hinweg einen im Wesentlichen gleichmäßigen hydraulischen Durchmesser aufweist.

5. Komponente nach Anspruch 1, wobei:
der Diffusionsbereich des Kühllochs eine verjüngte Ausgestaltung aufweist; oder
der Diffusionsbereich des Kühllochs eine konische Ausgestaltung aufweist.

6. Komponente nach Anspruch 1, wobei:
sich das Merkmal um wenigstens einen Abschnitt eines Umfangs einer Innenfläche des Kühllochs erstreckt; und/oder
das Merkmal einstückig mit einer Innenfläche des Kühllochs gebildet ist; und/oder
die Komponente ein Schaufelblatt ist.

7. Komponente nach einem der vorangehenden Ansprüche, wobei das Merkmal Rillen (84) beinhaltet, verschachtelte Stege (88) und Nuten (90) aufweist, wobei die Rillen spiralförmig um eine Achse angeordnet sind, die von dem Kühlloch definiert wird.

8. Komponente nach Anspruch 7, wobei:
eine Höhe der Stege zwischen etwa 3 % und etwa 30 % eines hydraulischen Durchmessers des Messbereichs beträgt; und/oder
wenigstens einer der Stege dazu ausgestaltet ist, sich um 360° zu drehen, über eine Strecke auftretend, die zwischen etwa dem 2- und etwa dem 15-Fachen eines hydraulischen Durchmessers des Kühllochs beträgt.

9. Turbinentriebwerk, umfassend:
eine Komponente nach einem der vorangehenden Ansprüche, die einem heißen Gasstrom ausgesetzt werden soll.

10. Turbinentriebwerk nach Anspruch 9, wobei das Merkmal dazu ausgestaltet ist, zu bewirken, dass sich die Luft um die Mittelachse des Kühllochs dreht.

11. Verfahren zum Kühlen einer Komponente eines Turbinentriebwerks, umfassend:
Bereitstellen von Luft an einen Strömungsweg, der durch ein Kühlloch definiert wird, das in der Komponente gebildet ist, wobei das Kühlloch einen Messbereich (80) und einen Diffusionsbereich (82) beinhaltet, wobei der Diffusionsbereich an den Messbereich fluidgekoppelt ist und stromabwärts von diesem angeordnet ist;
wobei ein hydraulischer Durchmesser des Diffusionsbereichs in einer Richtung weg vom Messbereich zunimmt; und
Drehen der Luft im Strömungsweg um eine Mittelachse des Kühllochs mittels Rillen, die sich von einer Innenfläche des Messbereichs und des Diffusionsbereichs einwärts zu der Mittelachse hin erstrecken, wobei die Rillen mittels eines additive Herstellungsprozesses einstückig mit der Innenfläche des Kühllochs gebildet sind.

## Revendications

1. Composant de moteur à turbine à gaz (10), comprenant :
au moins un trou de refroidissement (60) formé dans le composant, le trou de refroidissement ayant une surface interne qui définit un passage d'écoulement pour l'air configuré pour refroidir une partie du composant ; et
un élément (84) incluant un rainurage disposé dans au moins une partie du trou de refroidissement de sorte qu'une partie de l'élément s'étend de la surface interne (86) vers l'intérieur vers un axe central du trou de refroidissement, l'élément étant configuré pour générer un mouvement de l'air non-linéaire tandis qu'il s'écoule à travers celui-ci ;
**caractérisé en ce que** le trou de refroidissement inclut une section de mesure (80) et une section de diffusion (82), la section de diffusion étant couplée de manière fluidique à la section de mesure et disposée en aval de celle-ci, un diamètre hydraulique de la section de diffusion augmente dans une direction éloignée de la section de mesure, et en cela l'élément est disposé dans la section de mesure et la section de diffusion du trou de refroidissement par l'intermédiaire d'un procédé de fabrication additif.

2. Composant selon la revendication 1, dans lequel l'élément s'étend sur une partie du trou de refroidissement.

3. Composant selon la revendication 2, dans lequel l'élément s'étend sensiblement sur toute la longueur du trou de refroidissement.

4. Composant selon la revendication 1, 2 ou 3, dans lequel la section de mesure a un diamètre hydraulique sensiblement uniforme sur toute sa longueur.

5. Composant selon la revendication 1, dans lequel :
la section de diffusion du trou de refroidissement a une configuration fuselée ; ou
la section de diffusion du trou de refroidissement a une configuration conique.

6. Composant selon la revendication 1, dans lequel :
l'élément s'étend autour d'au moins une partie d'une périphérie d'une surface interne du trou de refroidissement ; and/or
l'élément est intégralement formé avec une surface interne du trou de refroidissement ; et/ou
le composant est un profil aérodynamique

7. Composant selon une quelconque revendication précédente, dans lequel l'élément inclut le rainurage (84) qui a des reliefs interposés (88) et des rainures (90), le rainurage étant disposé en spirale autour d'un axe défini par le trou de refroidissement.

8. Composant selon la revendication 7, dans lequel :
une hauteur du relief est entre environ 3 % et environ 30 % du diamètre hydraulique de la section de mesure ; et/ou au moins l'un des reliefs est configuré pour pivoter de 360 ° sur une distance entre environ 2 et d'environ 15 fois un diamètre hydraulique du trou de refroidissement.

9. Moteur à turbine, comprenant :
un composant selon quelconque revendication précédente, à exposer à un écoulement de gaz chaud.

10. Moteur à turbine selon la revendication 9, dans lequel l'élément est configuré pour amener l'air à pivoter autour de l'axe central du trou de refroidissement.

11. Procédé de refroidissement d'un composant de moteur à turbine, comprenant :
la fourniture d'air à un passage d'écoulement défini par un trou de refroidissement formé dans le composant, dans lequel le trou de refroidissement inclut une section de mesure (80) et une section de diffusion (82), la section de diffusion étant couplée de manière fluidique et disposée en aval de la section de mesure ; et
un diamètre hydraulique de la section de diffusion augmente dans une direction éloignée de la section de mesure ; et
la rotation d'air dans le passage d'écoulement autour d'un axe central du trou de refroidissement par l'intermédiaire du rainurage qui s'étend vers l'intérieur de la surface interne de la section de mesure et de la section de diffusion vers l'axe central, dans lequel le rainurage est intégralement formé avec la surface interne du trou de refroidissement par l'intermédiaire d'un procédé de fabrication additif.
